# EUROPEAN PATENT APPLICATION

(11) **EP 3 842 766 A1**
(43) Date of publication of application: **30.06.2021**
(21) Application number: 20203353.6
(22) Date of filing: 22.10.2020
(51) Int. Cl.: G01D 5/353, E01C 23/01, E02D 17/20, G01M 5/00, G01V 1/22

(54) **APPARATUS FOR MEASURING DISPLACEMENT OF SLOPE SURFACE BY USING OPTICAL FIBER BRAGG GRATING SENSOR**

(30) Priority: 23.12.2019 KR 20190173124
(71) Applicant: FBG Korea Inc., Yuseong-gu Daejeon 34016 (KR)
(72) Inventor: LEE, Geum Suk, 32824 Chungcheongnam-do (KR)
(74) Representative: Müller Verweyen

(57) **Abstract**

Disclosed is an apparatus for measuring displacement of a slope surface by using an optical fiber Bragg grating sensor. The apparatus includes a sensing unit configured to detect displacement of a slope surface by using an optical fiber; and a displacement meter connected to one end of the sensing unit to measure the displacement of the slope surface according to a change in length of the optical fiber, wherein the optical fiber includes a communication optical fiber manufactured by using a quartz glass material.

## Description

### BACKGROUND OF THE INVENTION

### 1. Field of the Invention

The present invention relates to an apparatus for measuring displacement of a slope surface, and more particularly, to an apparatus for measuring displacement of a slope surface that measures the displacement of a slope surface by using an optical fiber Bragg grating (FBG) sensor and an optical fiber.

### 2. Description of the Related Art

In general, an optical fiber sensor is a sensor that estimates a measured amount by using changes in the intensity of light passing through an optical fiber, a refractive index and length of an optical fiber, a mode, and a polarization state.

The main component of an optical fiber is quartz glass, and the optical fiber sensor includes a core part that is the center of the optical fiber to which germanium is added to have a slightly higher refractive index, and a cladding part which protects the center.

Light incident on the optical fiber core is reflected at the interface between the core layer having a high refractive index and the cladding layer having a low refractive index, and propagates along the optical fiber core.

Such optical fiber sensors are classified into an intensity type, a phase type, a diffraction grating type, a mode modulation type, a polarization type, a distribution measurement type, etc., depending on the effects thereof, and provide various measurement values such as a voltage, a current, a temperature, a pressure, a strain, a rotation rate, a sound, a gas concentration, etc.

The optical fiber sensor can perform ultra-precise broadband measurements without being affected by electromagnetic waves, facilitate remote measurements, does not use electricity in a sensor unit, and has no restrictions on the use environment because it is formed of silica having excellent corrosion resistance.

Among the optical fiber sensors, the representative one is an optical fiber sensor of the fiber Bragg grating sensor type.

The optical fiber Bragg grating sensor is a sensor in which several optical fiber Bragg gratings are engraved on a single optical fiber according to a predetermined length and which utilizes a feature in which a wavelength of light reflected from each grating is changed according to external conditions such as temperature, intensity, etc.

Therefore, the optical fiber Bragg grating sensor measures a change in refraction of light in the grating, which is caused when deformation occurs due to acting physical force on the optical fiber on which the grating is formed, to measure the strain of the optical fiber, such that it is possible to detect the load and stress acting on the structure to which the optical fiber is fixed.

The optical fiber Bragg grating sensor, in which a refractive index of the optical fiber core portion changes at a constant period, selectively reflects only light of a specific wavelength.

The optical fiber Bragg grating sensor has a unique wavelength value and has excellent physical property that is not affected by electromagnetic waves, and is an excellent physical-quantity measuring device replacing an existing electric gauge.

Therefore, the fiber optic Bragg grating sensor, which uses a principle of total reflection in which all light within a certain angle at the interface is reflected when light travels from a material having a high refractive index to a material having a low refractive index in the optical fiber, has been used as a sensor that detects the strain, angle, acceleration, displacement, temperature, pressure displacement, etc.

For example, the applicant of the present invention has disclosed techniques using an optical fiber Bragg grating sensor in following patent documents 1 and 2, which have been registered now.

Meanwhile, in order to predict and cope with collapse due to deformation due to the slope movement of mountains, roads, and tunnels, an apparatus for measuring displacement of a slope surface is installed to measure the displacement of a slope surface.

For example, patent document 3 discloses a configuration of a slope safety monitoring system using an optical fiber displacement meter.

However, since an apparatus for measuring displacement of a slope surface according to the related art is installed on mountains, roads, and tunnels while being exposed, the apparatus may be damaged or destroyed at it make contact with people or animals moving around.

In addition, an apparatus for measuring displacement of a slope surface according to the related art measures the displacement of a slope surface by using a wire made of a metal material such as iron.

As described above, when a wire made of a metal material such as iron is used, the coefficient of thermal expansion of the wire is large, so that a measurement error may occur due to a change in ambient temperature.
(Patent document 1) Korean Registered Patent No. 10-1057309 (Issued on August 16, 2011)
(Patent document 2) Korean Registered Patent No. 10-0992628 (Issued on November 05, 2010)
(Patent document 3) Korean Registered Patent No. 10-0943166 (Issued on February 19, 2010)

### SUMMARY OF THE INVENTION

To solve the problems described above, an object of the present invention is to provide an apparatus for measuring displacement of a slope surface by using an optical fiber Bragg grating sensor, which is capable of accurately measuring displacement due to the movement of a slope surface such as a mountain, a road, and a tunnel.

Another object of the present invention is to provide an apparatus for measuring displacement of a slope surface by using an optical fiber Bragg grating sensor, which is capable of preventing the occurrence of a measurement value error due to a temperature change around a slope surface.

Another object of the present invention is to provide an apparatus for measuring displacement of a slope surface by using an optical fiber Bragg grating sensor, which is capable of preventing damage or destroy caused by contact when animals move.

To achieve the objects described above, according to one aspect of the present invention, there is provided an apparatus for measuring displacement of a slope surface by using an optical fiber Bragg grating sensor, which includes a sensing unit configured to detect displacement of a slope surface by using an optical fiber; and a displacement meter connected to one end of the sensing unit to measure the displacement of the slope surface according to a change in length of the optical fiber, wherein the optical fiber includes a communication optical fiber manufactured by using a quartz glass material.

As described above, according to an apparatus for measuring displacement of a slope surface by using an optical fiber Bragg grating sensor of the present invention, it is possible to accurately measure displacement due to the movement of a slope surface such as a mountain, a road, a tunnel, etc.

In addition, according to the present invention, a measurement error may be prevented from occurring due to a temperature change around a slope surface by using an optical fiber having a very low coefficient of thermal expansion.

In addition, according to the present invention, by installing the protection pipe and the protection case outside the optical fiber and the displacement meter, it is possible to prevent damage or destroy caused by contact when animals, etc.

### BRIEF DESCRIPTION OF THE DRAWINGS

FIG. 1 is a perspective view of an apparatus for measuring displacement of a slope surface by using an optical fiber Bragg grating sensor according to a preferred embodiment of the present invention.
FIG. 2 is a view showing a state in which a protection pipe and a protection case shown in FIG. 1 are removed.
FIGS. 3 and 4 are enlarged views of both ends of the displacement measuring apparatus shown in FIG. 2.
FIG. 5 is a perspective view of the fixing module shown in FIG. 3.
FIGS. 6 and 7 are views illustrating a process of installing an apparatus for measuring displacement of a slope surface.
FIG. 8 is a view illustrating a state in which an apparatus for measuring displacement of a slope surface is installed on a slope surface.

### DETAILED DESCRIPTION OF THE INVENTION

Hereinafter, an apparatus for measuring displacement of a slope surface by using an optical fiber Bragg grating sensor according to a preferable embodiment of the present invention will be described in detail with reference to the accompanying drawings.

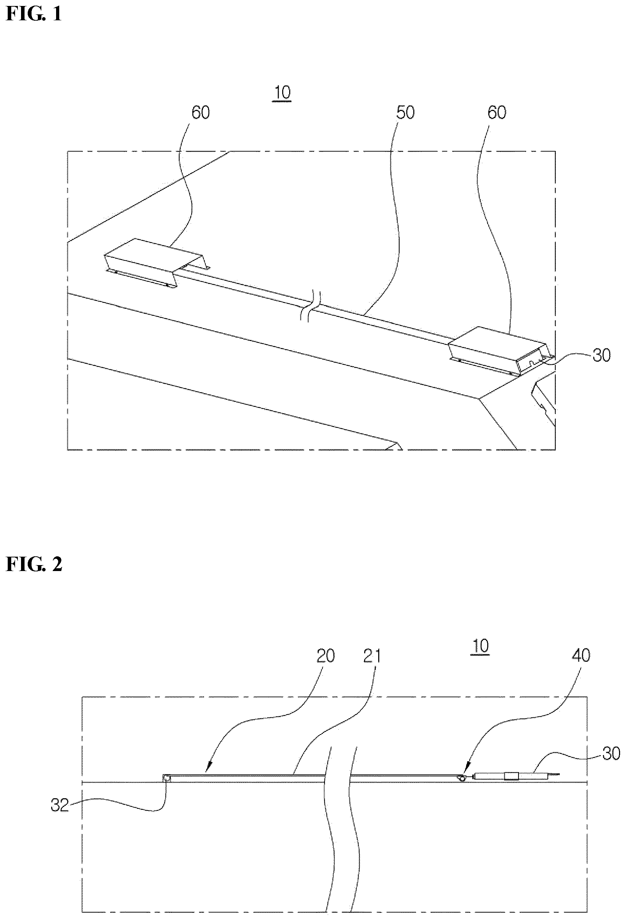

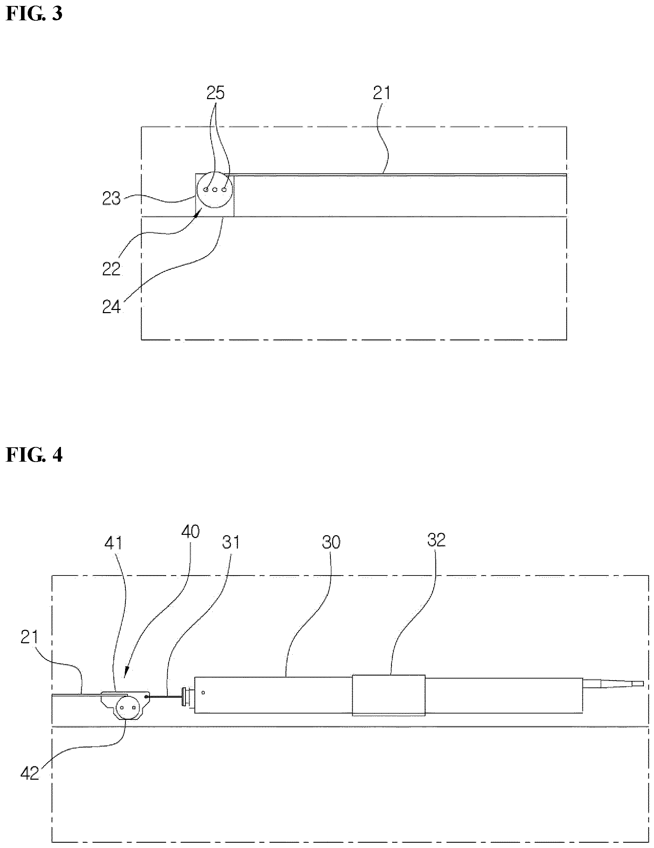

FIG. 1 is a perspective view of an apparatus for measuring displacement of a slope surface by using an optical fiber Bragg grating sensor according to a preferred embodiment of the present invention. FIG. 2 is a view showing a state in which a protection pipe and a protection case shown in FIG. 1 are removed. FIGS. 3 and 4 are enlarged views of both ends of the displacement measuring apparatus shown in FIG. 2.

Hereinafter, terms indicating directions such as 'left', 'right', 'front', 'rear' , 'upward', and 'downward' are defined as indicating each direction based on the state shown in each drawing.

As shown in FIGS. 1 to 4, an apparatus 10 for measuring displacement of a slope surface by using an optical fiber Bragg grating sensor according to a preferred embodiment of the present invention includes a sensing unit 20 for detecting displacement of a slope surface, and a displacement meter 30 connected to one end of the sensing unit 20 to measure the displacement of the slope surface according to a change in length of an optical fiber 21 installed in the sensing unit 20.

In addition, the apparatus 10 for measuring displacement of a slope surface by using an optical fiber Bragg grating sensor according to a preferred embodiment of the present invention may further include a connecting unit 40 that connects the optical fiber 21 and the displacement meter 30, a protection pipe 40 that shields the optical fiber 21 from the outside to protect the optical fiber 21, and a pair of protection cases 60 that protects both ends of the displacement measuring apparatus 10.

The sensing unit 20 includes an optical fiber 21 that is installed along the slope surface and changes in length according to the displacement of the slope surface.

The optical fiber 21 may be prepared as a communication optical fiber made of a material made of quartz glass.

The coefficient of thermal expansion of iron applied as an elastic wire in an apparatus for measuring displacement of a slope surface according to the related art is about 1.2*10-6 cm/cm/°C*10-6, whereas the coefficient of thermal expansion of the optical fiber 21 is only about 1/20 of that of iron.

As described above, according to the present invention, since a communication optical fiber made of quartz glass is applied to the sensing unit, the displacement of the optical fiber due to temperature change around the displacement measuring apparatus may be minimized, thereby preventing the occurrence of measurement error.

One end of the optical fiber 21 may be fixed to one side of the slope surface, and the other end of the optical fiber 21 may be connected to a connection optical fiber 31 connected to the displacement meter 30.

The displacement meter 30 may be provided as a displacement meter using an optical fiber Bragg grating sensor.

The displacement meter using such an optical fiber Bragg grating sensor has already been implemented in various configurations and schemes and has been commercialized. In this embodiment, a detailed description of the displacement meter will be omitted.

Next, a structure for fixing the sensing unit will be described in detail with reference to FIGS. 2 to 5.

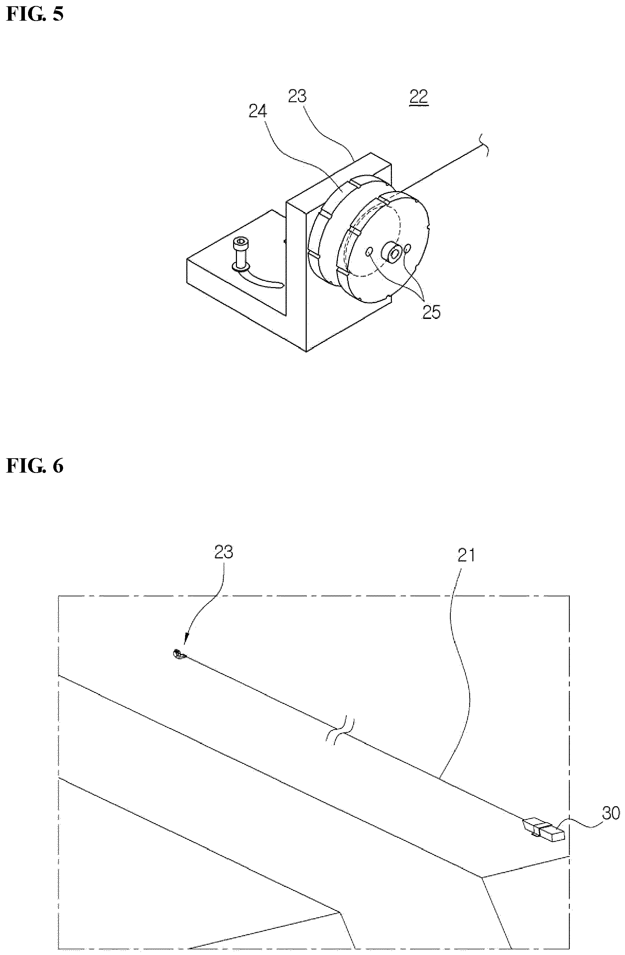

FIG. 5 is a perspective view of the fixing module shown in FIG. 3.

One end of the optical fiber 21, which is a left end when seen in FIG. 2, may be fixed by a fixing module 22.

In detail, as shown in FIGS. 3 and 5, the fixing module 22 may include a fixing block 23 fixed to one end of the slope surface and a rotating roller 24 rotatably installed on the fixing block 23 and having an outer peripheral surface around which the optical fiber 21 is wound.

That is, the optical fiber 21 may be moved to the slope surface to measure the displacement while being wound around the rotating roller 24 of the fixing module 22, and after the fixing block 23 is fixed to one end of the slope surface, may be drawn out on the rotation roller 24 along the slope surface.

In addition, when the optical fiber 21 is drawn out by a length sufficient to be installed on the slope surface, the rotating roller 24 may be fixed such hat the rotating roller 24 cannot be rotated by one or more fixing bolts 25 fastened around the rotating shaft.
- As described above, the present invention may improve portability and mobility by moving the fixing module while the optical fiber is wound around the rotating roller.

In addition, according to the present invention, after the optical fiber wound around the rotating roller is drawn out by the length sufficient to be installed on the slope surface, the fixing bolt is fastened to fix the rotating roller so that the rotating roller is prevented from rotating, thereby improving the workability of the optical fiber installation work.

The other end of the optical fiber 21 may be directly connected to the connecting optical fiber 31 connected to the displacement meter 30.

However, in this embodiment, as shown in FIGS. 2 and 4, the optical fiber 21 may be connected to the connection optical fiber 31 by using the connection module 40 so that the optical fiber 21 and the connection optical fiber 31 may be easily connected when installing the optical fiber 21.

For example, the connection module 40 may include a connection plate 41 which is connected to one end of the connection optical fiber 31 that is the left end when seen in FIG. 4, and a roller 42 which is fixedly installed on the connection plate 41 and has an outer peripheral surface around which the other end of the optical fiber 21, which is the right end when seen in FIG. 4, is wound.

The roller 42 may be rotatably installed on the connection plate 41 and fixed by a fixing bolt, or may be installed in a fixed state to be prevented from rotating.

The connection module 40 configured as described above may be installed while being spaced apart from the slope surface by a predetermined distance so as to prevent an error from occurring when measuring the displacement of the slope surface.

Accordingly, the present invention may prevent a problem in which an error occurs in a measured value while the connection module contacts the slope surface.

Meanwhile, since the optical fiber 21 may be broken when installed as a single strand, in the present embodiment, a plurality of strands, for example, four strands of mineral oil may be arranged in parallel to each other or may be installed in a twisted state.

As described above, according to the present invention, the plurality of optical fiber strands are applied to the sensing unit, so that the displacement measuring apparatus may be prevented from failing due to damage or breakage of the optical fiber, and additional work for maintenance may be minimized.

Referring to FIG. 1 again, the protection pipe 50 performs a function of preventing shock or vibration due to contact with a person or animal from being transmitted to the optical fiber 21 by shielding the optical fiber 21 from the outside.

The protection pipe 50 may be formed of a steel pipe made of a metal material having sufficient rigidity, for example, an iron material.

In this case, the length of the protection pipe 50 may be limited such that both ends of the protection pipe 50 can be installed while being spaced apart from the fixing module 22 and the connection module 40 by a predetermined distance, respectively.

As described above, the present invention may prevent a measurement error due to contact between the protection tube and the fixing and connection modules by limiting the length of the protection tube.

Meanwhile, because both ends of the protection pipe 50 are installed while being spaced apart from the fixing module 22 and the connection module 40, the pair of protection cases 60 may fully shield one end of the protection pipe 50 and the fixing module 22 from the outside, and the other end of the protection pipe 50, and the connection module 40 and the displacement meter 30 from the outside, respectively.

Each protection case 60 may be formed to have an opened lower surface and a substantially hat-shaped section.

That is, the protection case 60 may be manufactured by bending both ends of a plate made of a metal material or synthetic resin material having rigidity such as iron downward and outward, respectively.

As described above, according to the present invention, the protection cases are installed on both ends of the sensing unit, respectively, so that the displacement measuring apparatus may be prevented from being damaged or destroyed due to contact with humans or animals.

Next, a coupling relationship and an operation method of an apparatus for measuring displacement of a slope surface by using an optical fiber Bragg grating sensor according to a preferred embodiment of the present invention will be described in detail with reference to FIGS. 6 to 8.

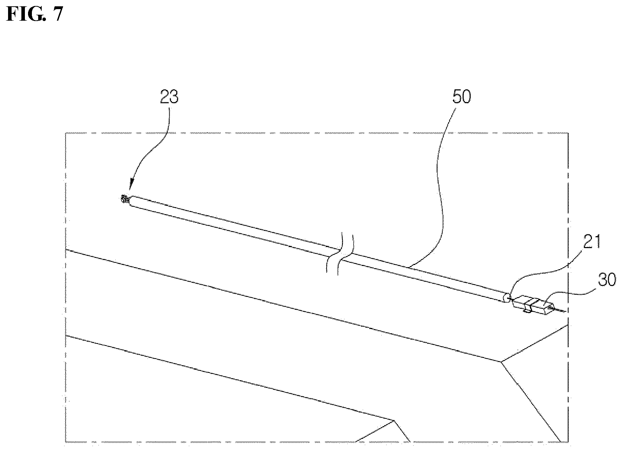

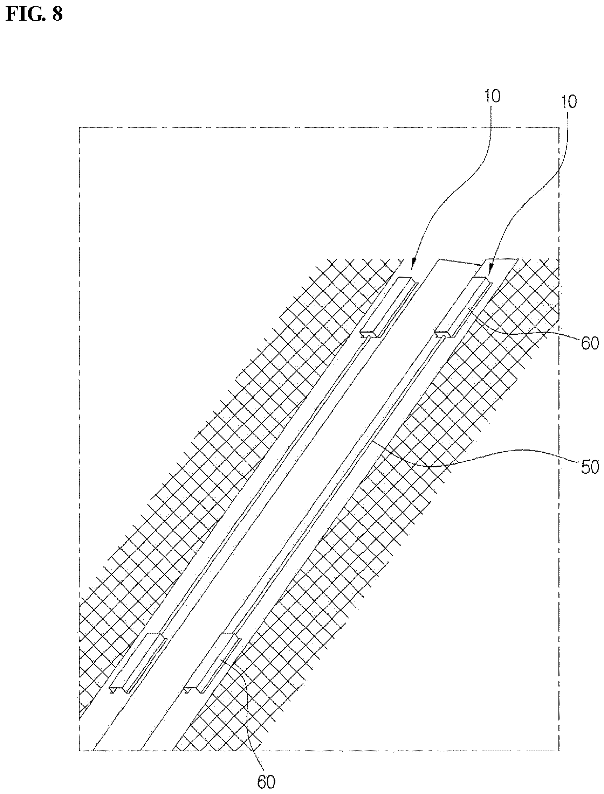

FIGS. 6 and 7 are views illustrating a process of installing an apparatus for measuring displacement of a slope surface. FIG. 8 is a view illustrating a state in which an apparatus for measuring displacement of a slope surface is installed on a slope surface.

FIG. 6 illustrates a state in which the sensing unit 20 and the displacement meter 30 are installed. FIG. 7 illustrates a state in which the protection pipe 50 is installed outside the optical fiber 21 of the sensing unit 20.

First, an operator arranges the fixing module 22 on one end of the slope surface to measure the displacement, and arranges the displacement meter 30 on the other end of the slope surface.

Then, as shown in FIG. 7, one end of the optical fiber 21 wound around the rotating roller 24 of the fixing module 22 is passed through the inside of the protection tube 50 and is drawn out, and the protection pipe 50 is fixed onto the slope surface.

One end of the optical fiber 21 drawn out from the protection pipe 50 is fixed to the roller 42 of the connection module 40, and one end of the connection optical fiber 31 connected to the displacement meter 30 is connected to the connection plate 41 of the connection module 40.

In this case, the optical fibers 21 may be arranged in parallel with each other as a plurality of strands, or may be arranged in a twisted state. In addition, the optical fiber 21 may be installed to be wound on the rotating roller 24 of the fixing module 22 and the roller 42 of the connection module 40 at least once.

Then, an operator fixes the rotating roller 24 by fastening the fixing bolt 25 to the rotating roller 24 so that the rotating roller 24 does not rotate in a state where a predetermined tension is applied to the optical fiber 21.

Last, the pair of protection cases 60 are installed on one ends of the fixing module 22 and the protection pipe 50, the other end of the protection pipe 50, the connection module 40, and the outside of the displacement meter 30, respectively, and are fixed onto the slope surface.

When the installation of the displacement measuring apparatus 10 is completed through such a process, as the lengths of the optical fiber 21 and the connection optical fiber 31 are changed due to deformation due to the movement of the slope surface, the displacement meter 30 may accurately measure the displacement of a slope surface by using the optical fiber Bragg sensor according to the changes of the lengths of the optical fiber 21 and the connection optical fiber 31.

Through the process described above, the present invention may accurately measure displacement due to the movement of a slope surface such as a mountain, a road, a tunnel, etc.

In addition, according to the present invention, a measurement error may be prevented from occurring due to a temperature change around a slope surface by using an optical fiber having a very low coefficient of thermal expansion.

In addition, according to the present invention, by installing the protection pipe and the protection case outside the optical fiber and the displacement meter, it is possible to prevent damage or destroy caused by contact when animals, etc.

While the present invention has been described with reference to exemplary embodiments, it will be apparent to those skilled in the art that various changes and modifications may be made without departing from the spirit and scope of the present invention.

The present invention may be applied to a technology of an apparatus for measuring displacement of a slope surface by using an optical fiber Bragg grating sensor that measures displacement due to the movement of a slope surface such as a mountain, a road, a tunnel, etc.

## Claims

1. An apparatus for measuring displacement of a slope surface by using an optical fiber Bragg grating sensor, the apparatus comprising:
a sensing unit configured to detect displacement of a slope surface by using an optical fiber; and
a displacement meter connected to one end of the sensing unit to measure the displacement of the slope surface according to a change in length of the optical fiber,
wherein the optical fiber includes a communication optical fiber manufactured by using a quartz glass material.

2. The apparatus of claim 1, wherein the optical fiber includes a plurality of strands which are arranged in parallel to each other or twisted with each other.

3. The apparatus of claim 1, wherein one end of the optical fiber is fixed to one end of the slope surface by a fixing module, and
a remaining end of the optical fiber is connected to a connection optical fiber connected to the displacement meter.

4. The apparatus of claim 3, wherein the fixing module includes a fixing block fixed to one end of the slope surface, and a rotating roller rotatably installed on the fixing block and having an outer peripheral surface around which the optical fiber is wound, and
the rotating roller is fixed such that the rotating roller is not rotated by at least one fixing bolt fastened around a rotating shaft after the optical fiber is drawn out by a length sufficient to be installed on the slope surface.

5. The apparatus of claim 4, wherein the remaining end of the optical fiber is connected to one end of the connection optical fiber through a connection module,
the connection module includes a connection plate connected to one end of the connection optical fiber, and a roller installed on the connection plate and having an outer peripheral surface around which the remaining end of the optical fiber is fixedly wound, and
the connection module is installed while being spaced apart from the slope surface by a preset distance.

6. The apparatus of claim 5, further comprising:
a protection pipe installed outside the optical fiber,
wherein the protection pipe is installed while being spaced apart from the fixing module and the connection module by a preset distance.

7. The apparatus of claim 6, further comprising:
a pair of protection cases that shield one end of the protection pipe, the fixing module, a remaining end of the protection pipe, and the connection module and the displacement meter from the outside.
